(19) Europäisches Patentamt
European Patent Office
Office européen des brevets

(11) **EP 1 052 473 B1**

(12) **FASCICULE DE BREVET EUROPEEN**

(45) Date de publication et mention
de la délivrance du brevet:
**02.05.2003 Bulletin 2003/18**

(51) Int Cl.⁷: **G01B 7/00**, G01B 7/04

(21) Numéro de dépôt: **00109877.1**

(22) Date de dépôt: **22.12.1997**

(54) **Dispositifs de mesure magnétique avec reduction de la dissipation d'énergie ou mode de veille**

Magnetische Messanordnungen mit reduziertem Energieverbrauch oder Stand By Modus

Magnetic measuring devices with reduced power consumption or stand by mode

(84) Etats contractants désignés:
**CH DE FR GB LI**

(43) Date de publication de la demande:
**15.11.2000 Bulletin 2000/46**

(62) Numéro(s) de document de la (des) demande(s)
initiale(s) en application de l'article 76 CBE:
**97811006.2 / 0 924 491**

(73) Titulaire: **Brown & Sharpe Tesa S.A.**
**1020 Renens (CH)**

(72) Inventeurs:
• **Jordil, Pascal M.**
**1612 Ecoteaux (CH)**
• **Bolli, Jean-Luc M.**
**1209 Genève (CH)**

(74) Mandataire: **Saam, Christophe**
**Patents & Technology Surveys SA**
**P.O. Box 1448**
**2001 Neuchâtel (CH)**

(56) Documents cités:
**EP-A- 0 493 260          EP-A- 0 626 562**
**EP-A- 0 924 491**

• **PATENT ABSTRACTS OF JAPAN vol. 013, no. 520 (P-963), 21 novembre 1989 (1989-11-21) & JP 01 212313 A (SANKYO SEIKI MFG CO LTD), 25 août 1989 (1989-08-25)**
• **PATENT ABSTRACTS OF JAPAN vol. 010, no. 382 (P-529), 20 décembre 1986 (1986-12-20) & JP 61 173113 A (AKAI ELECTRIC CO LTD), 4 août 1986 (1986-08-04)**
• **PATENT ABSTRACTS OF JAPAN vol. 018, no. 028 (P-1676), 17 janvier 1994 (1994-01-17) & JP 05 258244 A (FUJITSU LTD), 8 octobre 1993 (1993-10-08)**
• **PATENT ABSTRACTS OF JAPAN vol. 018, no. 144 (E-1521), 10 mars 1994 (1994-03-10) & JP 05 327060 A (MITSUBISHI MATERIALS CORP), 10 décembre 1993 (1993-12-10)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne des dispositifs de mesure de dimension à électrodes magnétorésistives.

Des dispositifs électroniques de mesure de longueur ou de position angulaire en milieu industriel par exemple doivent généralement satisfaire plusieurs contraintes partiellement contradictoires. Ils doivent fournir une précision et une résolution suffisante, et être utilisables dans des environnements soumis à des vibrations ou à des pollutions telles que poussière, huile ou humidité. On attend également de ces capteurs une intégration aisée dans des appareils de faible volume, sans réglages ou adaptations importants, une vitesse de mesure élevée et une consommation électrique réduite pour un coût aussi bas que possible

Différents types de dispositifs de mesure, basés sur différents principes physiques, ont été mis au point pour satisfaire ces exigences diverses. En particulier, des systèmes de mesure utilisant les variations de capacité provoquées par le déplacement d'un capteur en regard d'une règle ont été abondamment utilisés dans des dispositifs portables tels que calibres par exemple. Ces dispositifs doivent être maintenus assez propres pour fonctionner et sont donc mal adaptés à un fonctionnement dans un environnement humide ou sujet aux projections de lubrifiant ou d'huile de coupe par exemple. Des dispositifs de mesure de longueur basés sur le principe d'électrodes magnétorésistives ont été proposés par exemple dans le document de brevet DE4233331 (IMO), qui offrent une résistance bien supérieure aux salissures. Le dispositif décrit dans ce document comprend un capteur muni d'un réseau d'électrodes magnétorésistives reliées de manière à définir deux ponts de Wheatstone. Le capteur est monté sur un coulisseau et peut être déplacé face à une règle magnétisée avec une période de magnétisation λ. Un déplacement du capteur face à la règle provoque une modification du champ magnétique appliqué sur les diverses électrodes magnétorésistives du capteur, et donc une modification de leur résistance. En mettant les ponts de Wheatstone sous tension, on récolte à leur sortie un signal électrique fonction périodique de la position du capteur le long de la règle.

Les deux ponts de Wheatstone sont constitués de quatre électrodes magnétorésistives déphasées de λ/2. Les électrodes correspondantes de chaque pont occupent des positions déphasées de λ/4. Les électrodes des deux ponts sont entremêlées. Ce document suggère en outre l'utilisation de structures de barberpoles, qui permettent de modifier la direction du vecteur de courant I. Comme la résistance d'une électrode magnétorésistive est fonction de l'angle entre le vecteur d'aimantation et le vecteur de courant, les structures de barberpole permettent de contrôler le sens et l'amplitude de la variation de résistance des électrodes provoquée par le déplacement du capteur.

Chaque branche du pont de Wheatstone est constituée par une seule électrode magnétorésistive dont la largeur doit être suffisante pour réagir aux champs magnétiques relativement peu importants générés par la règle. La résistance des branches du pont est donc réduite, et des courants importants circulent à travers les ponts de mesure. La consommation électrique de ce dispositif est par conséquent importante.

Le document de brevet US5386642 (Heidenhain) décrit un capteur dans lequel les électrodes sont organisées en ponts de Wheatstone dont chaque branche est constituée de plusieurs électrodes magnétorésistives de même phase et reliées en série. La résistance des branches du pont est ainsi plus importante, ce qui permet de réduire sensiblement la consommation électrique. La consommation de ce type de capteur reste toutefois trop importante pour envisager une utilisation dans des appareils autonomes électriquement, par exemple dans des calibres de précision portables.

Le document JP-A-1-212313 décrit un circuit électronique apte à être utilisé dans un dispositif de mesure de dimension à électrodes magnétorésistives, dans lequel les électrodes magnétorésistives sont alimentées avec des sources de courants continus.

JP-A-61-173113 décrit une nouvelle manière de connecter des électrodes magnétorésistives dans un dispositif de mesure de dimensions angulaires, afin de réduire la consommation électrique. La réduction de consommation est due à une connexion particulière des électrodes.

Un but de l'invention est de réaliser un circuit électronique pour dispositif de mesure de dimension de type magnétorésistif amélioré par rapport aux circuits de l'art antérieur. En particulier, un but de la présente invention est de réaliser un circuit permettant d'utiliser un capteur magnétorésistif dans un dispositif de mesure portable tel que pied à coulisse alimenté par batterie.

Selon l'invention, ces buts sont atteints au moyen des dispositifs conformément à les revendications 1, 19 respectivement.

L'invention sera mieux comprise à la lecture de la description donnée à titre d'exemple et illustrée par les figures suivantes:

La figure 1 représente une vue en éclaté d'un calibre électronique portable selon la présente invention.

La figure 2 représente une vue schématique en perspective d'une portion de règle et d'une portion de capteur, plusieurs groupes d'électrodes magnétorésistives étant visibles sur ladite portion de capteur, la figure illustrant en outre le champ magnétique H(x) produit par la portion de règle sur la portion de capteur.

La figure 3 montre un schéma électrique illustrant la manière dont les différentes électrodes de règle sont connectées de manière à constituer deux ponts de mesure.

La figure 4 représente une vue d'ensemble schématique des différents éléments constituant le calibre portable selon la présente invention.

La figure 5 représente un schéma-blocs des principaux éléments constituant le circuit électronique selon l'invention.

La figure 6 représente un diagramme illustrant l'évolution des signaux c et s fournis par le capteur et amplifiés dans le circuit électronique.

La figure 7 illustre une représentation de l'évolution de ces deux signaux.

La figure 8 représente un chronogramme des signaux d'alimentation des ponts de Wheatstone selon l'invention.

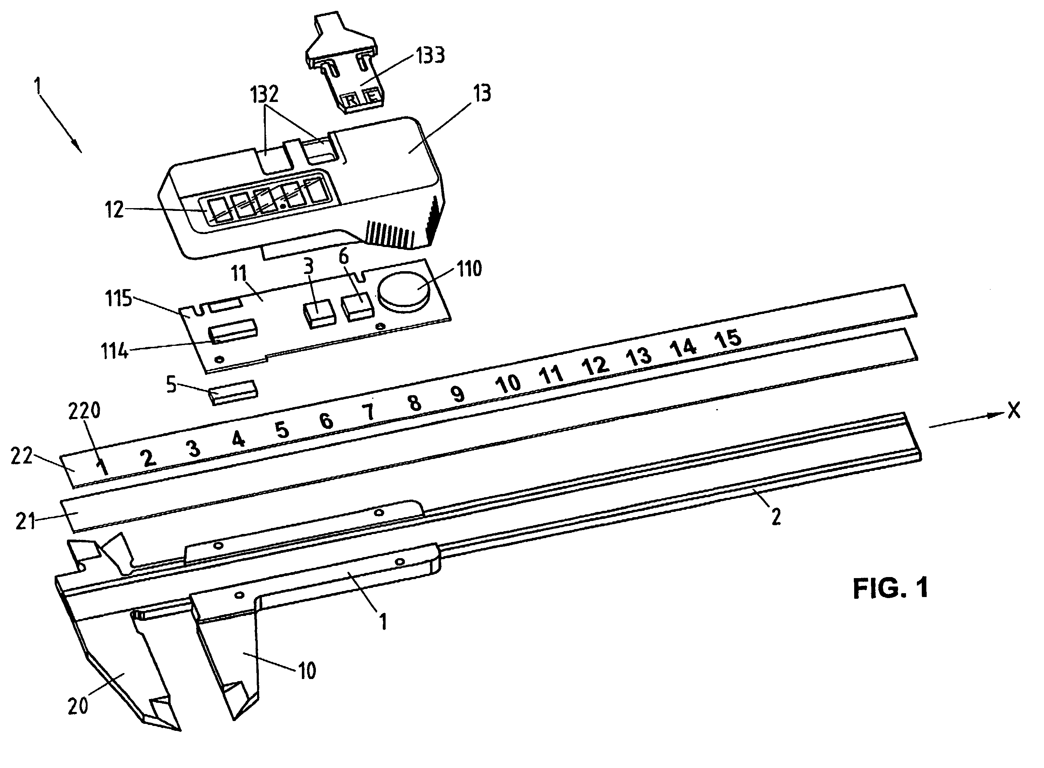

La figure 1 illustre en éclaté un calibre électronique portable selon la présente invention. La construction de tels calibres est connue et a été décrite par exemple dans la demande de brevet EP719999 au nom de la demanderesse.

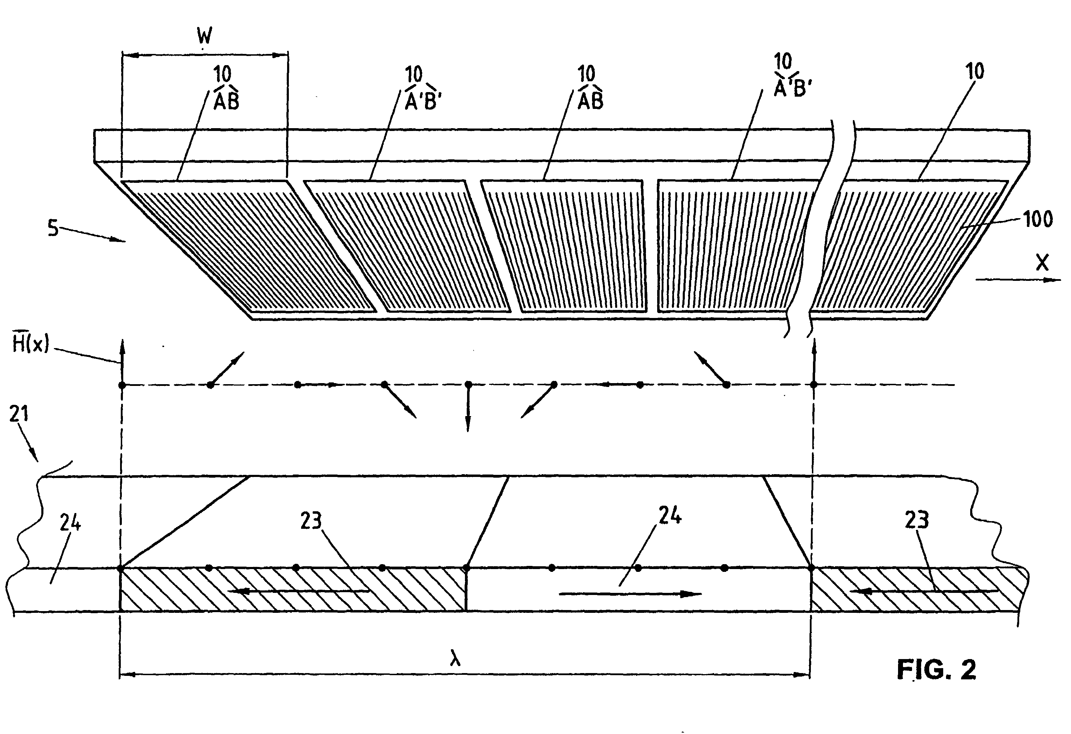

Le calibre de l'invention comprend une perche 2 et un coulisseau 1 apte à être déplacé longitudinalement le long de la perche. Le coulisseau est muni d'un bec mobile 10 tandis que la perche est équipée d'un bec fixe 20. Une règle 21 en matériau magnétique permanent est fixée sur la perche 2 et munie d'une succession de régions magnétisées 23, 24 (figure 2). La période de magnétisation vaut $\lambda$. La règle 21 est recouverte d'une couche protectrice en matériau non magnétique 22 munie d'une impression 220.

Des moyens électroniques, indiqués de manière générale par la référence 11, permettent d'afficher sur l'affichage électronique à cristaux liquides 12 une indication dépendant de la distance entre les becs du calibre 10 et 20. Ces moyens électroniques sont assemblés directement sur la plaque de circuit imprimé 115. Ils comprennent principalement un capteur magnétorésistif 5 assemblé sous la plaque de circuit imprimé 115 en regard de la règle magnétique 21. Le capteur 5 comporte un réseau formé d'un nombre important d'électrodes magnétorésistives organisées en groupes, la valeur des diverses résistances du réseau étant une fonction périodique de la position du coulisseau 1 le long de la perche 2. Le capteur peut par exemple être du type décrit dans l'un des documents de brevets déjà mentionnés DE4233331 ou US5386642. Les moyens électroniques 11 comprennent en outre des moyens d'alimentation électrique autonome, dans l'exemple représenté une pile 110. La pile 110 est de préférence constituée par une pile plate au lithium et doit garantir plusieurs heures, de préférence même plusieurs mois de fonctionnement autonome au dispositif.

Un circuit électronique intégré 3, de type ASIC, détermine à partir des valeurs de résistance des électrodes magnétorésistives sur le capteur 5 au moins un paramètre dépendant de la distance entre les becs 10 et 20; le circuit électronique 3 est connecté à un microcontrôleur standard 6 qui contrôle le circuit 3 et commande l'affichage 12 pour afficher la distance mesurée. Les moyens électroniques 11 comprennent en outre de préférence un aimant de polarisation 114 monté sur la face supérieure du circuit imprimé 115, face au capteur 5.

Les moyens électroniques 11 sont protégés par un boîtier 13, des boutons 132 permettant de commander par exemple la mise en marche du calibre ou d'autres fonctions telles que remise à zéro, addition ou moyennage de mesures successives, etc.. Un connecteur optoélectronique sériel 133 est prévu comme interface entre le calibre 1 et des instruments extérieurs tels qu'imprimante, ordinateur personnel ou machine par exemple.

Le capteur magnétorésistif 5 comporte un grand nombre d'électrodes magnétorésistives parallèles 100, visibles de manière schématique sur la figure 2. Les dimensions des électrodes 100 sont choisies de manière à obtenir une grande résistance et donc de réduire la consommation électrique du capteur.

Les différentes électrodes magnétorésistives 100 sont disposées longitudinalement sur le capteur 5 de manière à occuper diverses positions de phase par rapport au champ magnétique $H_x(x)$ de période $\lambda$ généré par la règle 2. A une distance suffisante de la règle 2, le champ magnétique est une fonction approximativement sinusoïdale de x. Le champ magnétique produit par la règle 21 sur chaque électrode magnétorésistive 100 est donc une fonction sinusoïdale de la position longitudinale de cette électrode ; la résistance de chaque électrode 100 évolue de manière sinusoïdale lorsque le coulisseau 1 est déplacé le long de la perche. Le circuit de mesure 3, 6 détermine à l'aide de la valeur des différentes résistances 100 la position du coulisseau et affiche cette information sur l'affichage 12.

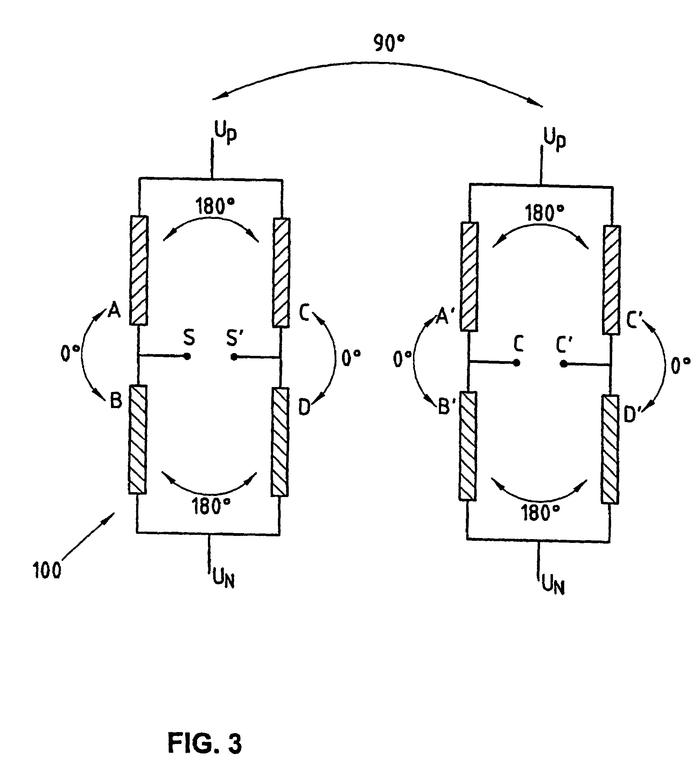

La figure 3 illustre de manière schématique un mode de connexion préférentiel des électrodes 100. Les électrodes magnétorésistives sont connectées entre elles dans cet exemple de manière à définir deux ponts de mesure (ponts de Wheatstone). Les électrodes correspondantes de chaque pont sont déphasées de 90°, c'est-à-dire de $\lambda/4$. Chaque pont comporte quatre jeux d'électrodes magnétorésistives ABCD, respectivement A'B'C'D'. Des modes de connexion différents, par exemple avec un ou trois ponts de mesure, peuvent aussi être utilisés dans le cadre de cette invention.

Le nombre d'électrodes magnétorésistives par jeu est de préférence supérieur à 4 mais n'est limité que par la dimension du circuit intégré 5; dans un mode de réalisation de l'invention, le nombre d'électrodes magnétorésistives par jeu est égal à 72. Le nombre total d'électrodes magnétorésistives 100 sur le capteur 5, dans cet exemple non limitatif avec deux ponts de mesure constitués chacun de 4 jeux de 72 électrodes, est alors égal à 576.

Les électrodes constituant chaque jeu sont reliées en série et réparties de manière à occuper des positions de phase proches, par exemple des positions réparties entre [kλ-w/2 et kλ+w/2] où k est un nombre entier et w un paramètre indiquant l'étalement des électrodes de chaque jeu. Dans l'exemple illustré sur la figure 2, w est égal à λ/4. Un ensemble d'électrodes contiguës provenant du même jeu et étalées sur w est appelé un groupe et est indiqué par la référence 10 sur la figure 2. Cette configuration permet d'obtenir une valeur résultante des résistances des jeux d'électrode A à D' qui moyenne les résistances d'électrodes étalées sur un intervalle de largeur w. Dans une seconde variante préférentielle, qui peut être combinée avec la première variante, chaque jeu comprend des électrodes positionnées avec déphasages de 180° mais avec des orientations de structures de barberpoles opposées, par exemple à +45° et -45°.

Sur la figure 3, le jeu d'électrodes A, respectivement A', est déphasé de 180° par rapport au jeu d'électrode C, respectivement C'. De la même façon, le jeu d'électrodes B, respectivement B', est déphasé de 180° par rapport au jeu d'électrode D, respectivement D'. Les jeux A, A', C, C' occupent les mêmes positions de phase que les jeux respectifs B, B', D, D'. Les électrodes magnétorésistives de chaque paire AB, A'B', CD, C'D' sont cependant munies de structures de barberpoles orientées de manière opposée, par exemple à +45° et -45°.

Les deux ponts sont alimentés entre les bornes $U_P$ et $U_N$. Les signaux à la sortie des ponts sont récoltés entre les points S et S', respectivement entre les points C et C'. Le signal entre les points C et C' est déphasé de 90° par rapport au signal entre les points S et S'.

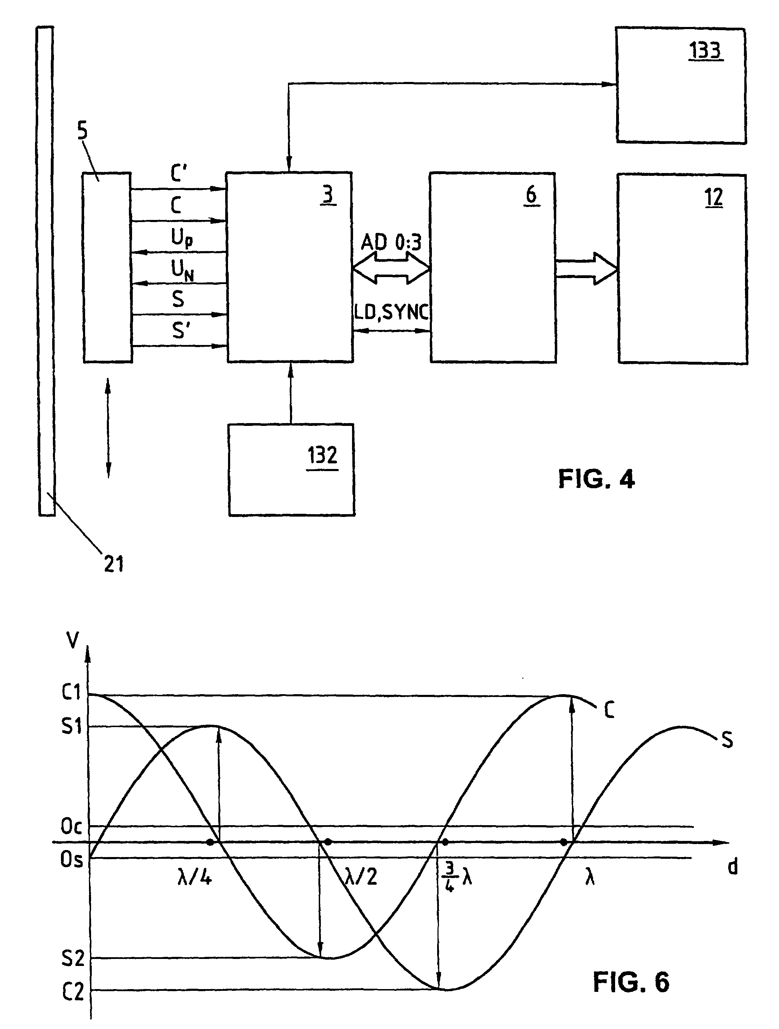

Nous allons maintenant discuter, en relation avec la figure 4, l'architecture générale du dispositif de mesure de l'invention.

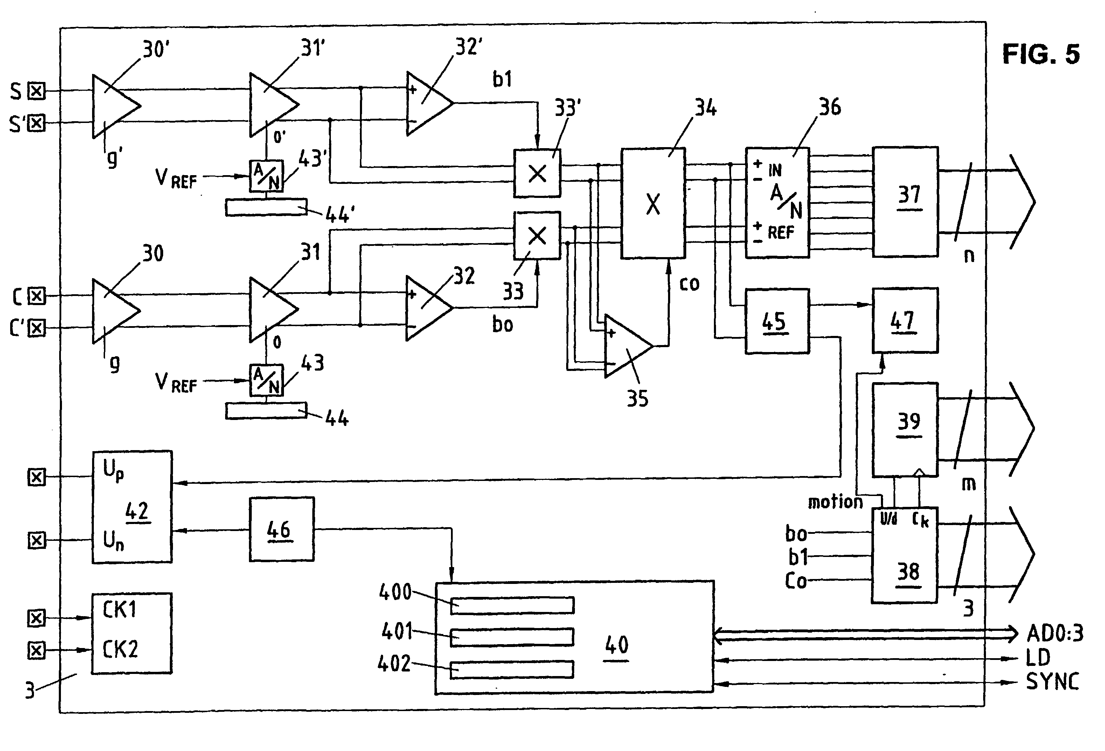

Les ponts de Wheatstone dans le capteur 5 sont alimentés par le circuit 3 entre les tensions $U_p$ et $U_n$. Lorsque le coulisseau 1 est déplacé en regard de la règle 21, les ponts de Wheatstone livrent en retour des signaux différentiels c (entre les bornes C et C') et s (entre les bornes S et S') approximativement sinusoïdaux en fonction de la position du capteur, un signal étant déphasé de 90 degrés par rapport à l'autre. Ces signaux sont transmis au circuit électronique 3 qui, comme discuté plus bas en relation avec la figure 5, détermine à partir de ces signaux la position du capteur. Le circuit électronique 3 contrôle en outre l'interface avec le clavier 132 ainsi qu'une interface optionnelle avec des appareils externes, par exemple une interface sérielle RS232 (133).

Le dispositif de mesure de l'invention comporte en outre de préférence une petite mémoire vive de paramètres (PRAM), non représentée, pour mémoriser certains paramètres, tels que le choix de l'unité de mesure, etc.. Cette zone de mémoire peut aussi être intégrée au circuit 3 ou au microcontrôleur 6.

Les principaux éléments du circuit électronique 3 sont détaillés sur la figure 5. Le fonctionnement de ce circuit est contrôlé par un microcontrôleur 6 au moyen de registres de contrôle 400 à 402 accessibles en lecture et en écriture depuis l'extérieur du circuit 3. La position déterminée par le circuit 3 est également stockée dans un ou plusieurs registres de résultat accessible en lecture depuis le microcontrôleur 6. Le microcontrôleur exécute un programme pour contrôler le fonctionnement du circuit 3, afficher les résultats obtenus sur l'affichage 12, et implémenter les fonctions spécifiques à l'instrument telles que conversions d'unités, calibration du zéro, contrôle d'erreurs, contrôle du mode de veille et des interruptions du circuit 3, etc.. Dans l'exemple illustré sur la figure 5, seuls trois registres de contrôle et/ou de résultat 400 à 402 sont représentés, étant entendu que ce nombre n'est nullement limitatif.

Les signaux sinusoïdaux s (bornes S-S'), respectivement cosinusoïdaux c (C-C'), fournis par le capteur 5 sont amplifiés par un amplificateur à gain g variable 30, 30' puis par un second étage d'amplification 31, 31' à compensation d'offset O, afin de les amener à un niveau suffisant pour une conversion analogique numérique.

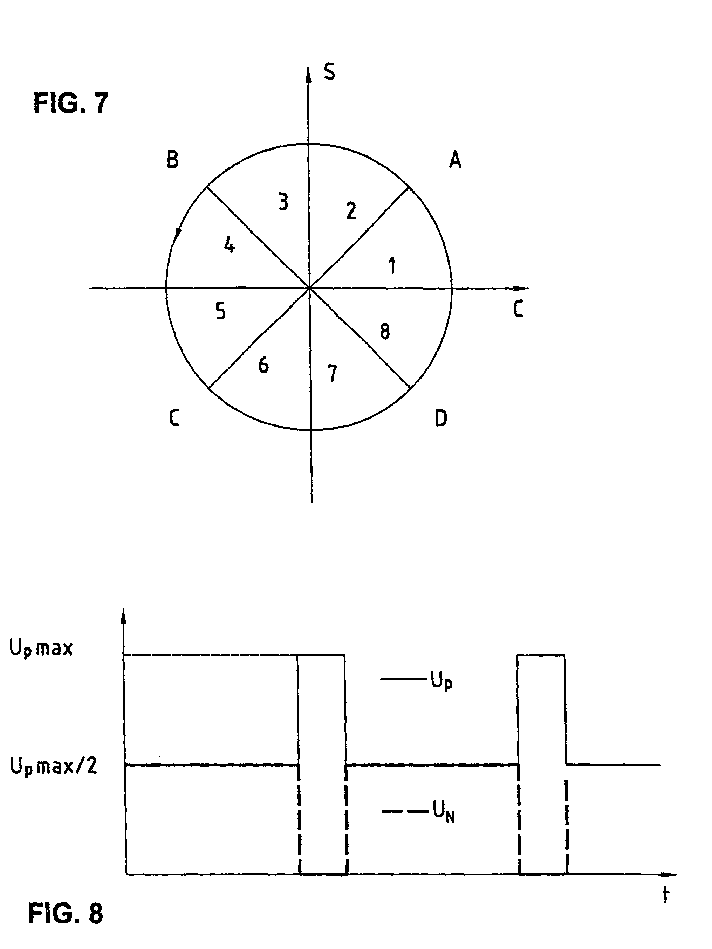

Les signaux à la sortie des amplificateurs 32, 32' sont illustrés sur la figure 6. On constate que la forme des signaux différentiels sur chaque canal c et s est très sensiblement sinusoïdale, mais qu'ils comportent un offset $O_c$, respectivement $O_s$. La principale cause d'offset dans le système est due aux asymétries des branches des ponts de Wheatstone sur le capteur 5. Ce type d'offset est proportionnel à la tension d'alimentation des ponts $U_p$ - $U_n$. D'autres causes d'offset sont dues à aux amplificateurs 30, 31 notamment.

Pour garantir une précision de mesure optimale, ces offsets doivent être compensés. Une valeur de compensation d'offset pour chaque canal est déterminée au cours d'une procédure de calibration et stockée dans des registres 44, 44' (figure 5). Cette valeur est convertie par les convertisseurs 43, 43' en signal analogique de compensation d'offset O, O' pour les amplificateurs à compensation d'offset 31, 31'. Le voltage de référence Vref des convertisseurs 43, 43' est proportionnel à la tension d'alimentation des ponts $U_p$ - $U_n$, de manière à compenser l'influence de cette tension sur l'offset du capteur.

La valeur de compensation d'offset est déterminée au cours de la procédure de calibration en échantillonnant

deux valeurs $S_1$, $S_2$, respectivement $C_1$, $C_2$, symétriques par rapport au prochain extrema de chaque canal. L'offset du canal c est ainsi déterminé en échantillonnant les valeurs du signal sur ce canal lors des passages à zéro du signal s, et vice-versa (voir figure 6). Etant donné l'allure sinusoïdale des signaux, les deux valeurs d'échantillonnage $C_1$ et $C_2$ sont symétriques par rapport à la tension d'offset Oc de ce canal ; cette tension peut alors être déterminée simplement par la formule $O_c=(C_1+C_2)/2$. Les valeurs $C_1$ et $C_2$ sont échantillonnée par le convertisseur analogique-numérique 36 placé au moyen de registres appropriés dans un mode de calibration, et la valeur de compensation d'offset $O_c$ est calculée selon la formule ci-dessus par le microcontrôleur 6 et mémorisée par celui-ci dans le registre 44. Une procédure similaire peut être utilisée pour déterminer à partir des valeurs $S_1$ et $S_2$ la valeur de compensation d'offset à mémoriser dans le registre 44' de l'autre canal s.

Ce processus de calibration est selon le besoin effectué une seule fois dans la vie de l'instrument, ou à chaque remplacement de batterie, ou à intervalles réguliers, par exemple toutes les quelques secondes, pour compenser toute variation potentielle due par exemple à la température, à l'état de charge de la batterie, au vieillissement, etc..

La précision maximale est requise lorsque le capteur est immobile, c'est-à-dire lorsque le senseur délivre un signal pratiquement continu. Il est donc important de concevoir les amplificateurs 30, 30', 31, 31' et le chemin des signaux de manière à ce qu'ils génèrent un très faible bruit 1/f.

Comme on le voit clairement sur la figure 6, chaque signal différentiel c, s passe deux fois par zéro lors de chaque déplacement du capteur d'une période λ. Cette situation est illustrée schématiquement sur la figure 7. Quatre quadrants A, B, C, D peuvent être définis selon la polarité des deux signaux c et s. L'évolution des signaux c et s lors d'un déplacement dans le sens positif du capteur est illustré par la flèche. Un quadrant correspond à une plage de déplacement de λ/4. En comparant les valeurs absolues de ces deux signaux (|c| et |s|), 8 octants, correspondant à des plages de λ/8, peuvent être définis.

L'octant dans lequel se trouve le capteur est déterminé au moyen des trois comparateurs 32, 32' et 35. Le comparateur 32 fournit un bit $b_0$ à 1 lorsque le signal c sur le premier canal est positif. Le comparateur 32' fournit un bit $b_1$ à 1 lorsque le signal s sur le second canal est positif. Un troisième bit $c_0$ indiquant l'octant est déterminé au moyen du comparateur différentiel 35 et vaut 1 lorsque |c| >|s|. Ces relations sont résumées sur le tableau ci-dessous :

| Octant | c | $b_0$ | s | $b_1$ | $c_0$ |
|---|---|---|---|---|---|
| 1 | >0 | 1 | >0 | 1 | 1 |
| 2 | >0 | 1 | >0 | 1 | 0 |
| 3 | <0 | 0 | >0 | 1 | 0 |
| 4 | <0 | 0 | >0 | 1 | 1 |
| 5 | <0 | 0 | <0 | 0 | 1 |
| 6 | <0 | 0 | <0 | 0 | 0 |
| 7 | >0 | 1 | <0 | 0 | 0 |
| 8 | >0 | 1 | <0 | 0 | 1 |

Les bits de poids fort du résultat sont déterminés au moyen du compteur bidirectionnel 38 qui compte le nombre de périodes λ traversées par le capteur 5 depuis le début de la mesure. Les déplacements dans le sens de la flèche sur la figure 7 sont additionnés tandis que les déplacements en sens inverse sont décrémentés. Une logique combinatoire 39, non détaillée, convertit les trois bits d'octants $b_0$, $b_1$ et $c_0$ en signaux d'incrémentation/décrémentation u/d et d'horloge ck pour le compteur 39. Le nombre m de bits du compteur dépend du nombre de périodes λ sur la règle 21; par exemple, si la période λ vaut 1 millimètre et la longueur de la règle 25 centimètres, le capteur peut traverser au maximum 250 périodes, ce qui peut être indiqué avec 8 bits.

La position à l'intérieur de la période peut être déterminée avec plus de précision au moyen de l'indication d'octant fournie par les bits $b_0$, $b_1$ et $c_0$. Cette indication est convertie au moyen de la logique combinatoire 38 en trois bits de poids intermédiaire selon le système binaire. Le circuit 38 fournit en outre un signal motion à chaque changement de quadrant, le rôle de ce signal étant indiqué plus loin.

La résolution fournie par ce système de mesure grossier est donc de λ/8, dans l'exemple ci-dessus de 125 μm. Pour obtenir une résolution plus fine, un système de mesure fin est nécessaire. Ce système peut éventuellement être débranché lors des déplacements du capteur, comme expliqué plus bas.

La mesure fine est obtenue en interpolant la position x du capteur à l'intérieur de l'octant, conformément à la formule :

$$x = \frac{p}{2\Pi} \; ArcTan \; \frac{S}{C}$$

Cette division est effectuée au moyen du convertisseur analogique numérique 36 qui convertit le signal (différentiel) sur l'entrée IN en un signal numérique. L'autre signal au dénominateur est fourni à l'entrée de référence (différentielle) de convertisseur 36; la division du signal IN par le signal REF et la conversion numérique du résultat sont ainsi effectuées en une seule opération. Le résultat numérique de la division est fourni comme entrée d'adresse à la table de conversion 37 (ROM) qui transforme la tangente en son arc et fournit ainsi directement les n bits de poids faibles du résultat.

Les bits de poids forts et de poids faibles du résultat peuvent soit être directement fournis au microcontrôleur 6, soit de préférence être d'abord mémorisés dans des registres de résultat parmi les registres 400-402.

Pour limiter la taille de la table 37, toutes les opérations sont rapportées au premier octant. L'inverseur 33 inverse le signal différentiel c lorsque $b_0$ vaut 0, c'est-à-dire lorsque le signal c est négatif (quadrants B et C). L'inverseur 33' inverse le signal différentiel c lorsque b1 vaut 0, c'est-à-dire lorsque le signal s est négatif (quadrants C et D). L'élément 34, commandé par le bit $c_0$, intervertit les signaux c et s lorsque $c_0$ vaut 0, c'est-à-dire lorsque le signal se trouve dans le second octant.

Le fonctionnement des éléments 33, 33' et 34 peut être commandé au moyen de registres accessibles en lecture-écriture depuis l'extérieur du circuit 3 au travers de l'interface 40, des lignes d'adresses et de données AD0:3 et des signaux correspondants LD et SYNC.

Le circuit électronique 3 est également responsable de l'alimentation électrique des ponts de Wheatstone dans le capteur 5. Si la résistance résultante totale des ponts du senseur est de 30 kOhm par exemple, et la tension d'alimentation de 3 volts, la consommation électrique dans les électrodes magnétorésistives 100 est donc d'environ 100 μA. Selon une caractéristique importante de l'invention, ces ponts (ABCD, A'B'C'D') ne sont pas alimentés en permanence, afin de réduire la dissipation d'énergie.

Un exemple préférentiel de la forme des signaux d'alimentation des ponts $U_p$ et $U_n$ est illustré sur la figure 8. Le potentiel de la broche $U_p$ varie entre le potentiel maximal $Up_{max}$ (par exemple égal à Vdd) et la moitié de ce potentiel $Up_{max}/2$. Le potentiel de la broche Un varie entre $Up_{max}/2$ et Vss (0 Volts). Cette configuration permet d'éviter aux amplificateurs d'entrée 30, 30' de subir des sauts de tensions trop importants, et donc d'utiliser des amplificateurs d'entrée dont le taux de réjection en mode commun (CMRR) est moins critique. En outre, la consommation due à la charge/décharge des capacités parasites $C_{par}$ est réduite de moitié :

$$C_{par}(U_pmax/2)^2f + C_{par}(U_pmax/2)^2f = 1/2C_{par}(U_pmax/2)^2f$$

Par ailleurs, cette configuration permet de réduire le temps de commutation entre les intervalles d'alimentation et les intervalles de réduction d'alimentation, et de compenser le couplage parasite occasionné par les transitions du signal $U_p$ par les transitions complémentaires de $U_n$.

Les signaux $U_p$ et $U_n$ sont fournis par un bloc séquentiel 42, à partir des signaux d'horloge de l'oscillateur 41 et de la tension d'alimentation du circuit Vdd. L'oscillateur 41 reçoit des signaux d'horloge d'un quartz hors du circuit 3. La réalisation du bloc 42 n'utilise que des techniques conventionnelles en électronique et n'est donc pas détaillée ici.

Des registres de commande appropriés parmi les registres 400 à 402 définissent le rapport de cycle opératoire entre les intervalles d'alimentation et les intervalles de réduction d'alimentation. Par exemple, deux bits dans l'un de ces registres permettent de sélectionner quatre rapports de cycle opératoire : 100% (toujours alimenté), 50%, 25% (comme représenté) et 0% (complètement arrêté).

D'autres modes d'alimentation des électrodes magnétorésistives 100 peuvent être imaginés selon le capteur utilisé, par exemple des alimentations en courant, des alimentations non différentielles, etc..

Le circuit 3 comporte de préférence un fréquencemètre 45 qui détermine la fréquence du signal de mesure, et donc la vitesse de déplacement du capteur. Selon une caractéristique optionnelle de l'invention, le rapport de cycle opératoire du bloc 42 dépend de la fréquence détectée : lorsque le capteur se déplace rapidement, les ponts sont alors plus souvent alimentés que lorsque le capteur reste immobile. Le fréquencemètre peut en outre dans une variante être utilisé pour débrancher le circuit de mesure fine (éléments 36, 37) lors de déplacements rapides du capteur, afin de réduire la consommation électrique.

Le rapport de cycle opératoire peut en outre être commandé par un circuit 46 de détection de l'état de charge de la batterie 110 alimentant le circuit électronique : lorsque la batterie fournit une tension en-dessous d'un minimum prédéfini, la durée des intervalles d'alimentation des électrodes magnétorésistives 100 est réduite. Dans une variante, les circuits de mesure fine 36, 37 sont également débranchés à ce moment. Cette situation est de préférence indiquée à l'utilisateur par un signal adapté sur l'affichage 12 affiché par le contrôleur 6 lorsqu'il reçoit une interruption correspondante du circuit 3.

L'état de la batterie et la fréquence peuvent aussi être détectés par le microcontrôleur 6 qui contrôle alors le cycle opératoire au moyen des registres de contrôle mentionnés.

Le circuit 3 peut en outre comporter des moyens non représentés de synchronisation entre les systèmes de mesure fins et grossiers, particulièrement si les caractéristiques des comparateurs 32, 32' et 35 sont imparfaites et qu'ainsi les deux systèmes pourraient ne pas être en accord sur l'estimation du quadrant actuel.

Le circuit comporte en outre de préférence un circuit 47 de mode de veille. En mode de veille, seuls les composants suivants du circuit 3 restent alimentés : la mémoire vive pour paramètres, le clavier 132, l'interface 40, et éventuellement le circuit de mesure grossière 30, 31, 3235, 38, 39 et le circuit d'oscillateur 41, 42. Les composants externes au circuit 3, y compris le microcontrôleur 6, sont en revanche déclenchés.

Le mode de veille peut être sélectionné par le microcontrôleur 6, par exemple au moyen d'un registre de commande approprié dans l'interface 40, ou par le circuit de détection d'état de batterie 46. Le circuit peut ensuite être réveillé par l'une des actions suivantes interceptées par le circuit de mode de veille 47 : actionnement du clavier 132, déplacement du capteur (détecté par le bit motion indiqué plus haut), message reçu sur l'interface sérielle 133, etc.. Plusieurs modes de veille peuvent de préférence être définis au moyen de registres de contrôle adaptés : par exemple, un réveil par déplacement du capteur n'est possible que si les électrodes magnétorésistives 100 restent alimentées au moins de manière intermittente, ce qui n'est pas souhaitable dans tous les modes de veille.

Le circuit 3 contient en outre des circuits de communication, non représentés, pour recevoir et émettre des signaux de type RS232 sur l'interface sérielle optoélectronique 133.

Bien que le circuit décrit s'avère particulièrement avantageux dans un dispositif de mesure de dimension portable tel que pied à coulisse ou micromètre par exemple, son utilisation est naturellement aussi possible dans tout type de dispositif fixe ou mobile de mesure de dimension longitudinale ou angulaire.

L'homme du métier comprendra que certaines des caractéristiques du circuit décrit peuvent être utilisées indépendamment. En particulier, le circuit d'ajustage d'offset décrit et revendiqué peut être utilisé indépendamment de la réalisation particulière du circuit d'alimentation 42. L'invention concerne donc également un circuit électronique 3 pour dispositif de mesure 1 de dimension à électrodes magnétorésistives 100 comportant un circuit de mesure 30-39 comprenant au moins une entrée (C, C', S, S') destinée à être connectée audit réseau, ledit circuit de mesure fournissant au moins une grandeur dépendant de la résistance d'au moins une des électrodes magnétorésistives 100 du réseau, caractérisé en ce que qu'il comprend en outre des moyens 43, 44, 43', 44' d'ajustage d'offset pour ajuster l'offset de mesure. L'invention concerne donc aussi un tel circuit électronique dans lequel lesdits moyens d'ajustage d'offset comprennent au moins un amplificateur à compensation d'offset 31, 31' pour chaque canal de mesure, et dans lequel les moyens d'ajustage d'offset comprennent pour chaque canal de mesure un registre 44, 44' indiquant une valeur de compensation d'offset et un convertisseur numérique-analogique 43, 43' commandant ledit amplificateur à compensation d'offset, la tension de référence du convertisseur numérique-analogique étant proportionnelle à la tension d'alimentation du réseau d'électrodes magnétorésistives 100.

## Revendications

1.   Dispositif de mesure de dimension (1) comprenant :

   une règle (21) munie d'une succession de régions magnétisées (23, 24),

   un capteur (5) apte à être déplacé parallèlement face à la règle (21) et muni d'un réseau d'électrodes magnétorésistives (100) reliées de manière à constituer au moins un pont de mesure,

   un circuit d'alimentation électrique (42) dudit au moins un pont de mesure,

   un circuit de mesure (30-39) fournissant au moins une grandeur dépendant de la résistance d'au moins une des électrodes magnétorésistives (100) lorsque ledit au moins un pont de mesure est alimenté, ledit circuit comportant une pluralité de registres de contrôle du fonctionnement,

   caractérisé en ce que ledit au moins un pont de mesure n'est pas alimenté en permanence par ledit circuit d'alimentation électrique (42), de façon à réduire pendant au moins un intervalle de durée limitée la dissipation d'énergie dans lesdites électrodes magnétorésistives.

2.   Dispositif de mesure selon la revendication précédente, caractérisé en ce que la tension d'alimentation est fournie entre deux bornes externes (Up, Un) du circuit d'alimentation,
   une borne (Up) étant alimentée avec un potentiel maximal ($Up_{max}$) et l'autre (Un) avec un potentiel proche de 0 Volts pendant les intervalles d'alimentation,

les deux bornes étant alimentées avec un potentiel proche de la moitié dudit potentiel maximal pendant les intervalles de réduction d'alimentation.

3. Dispositif de mesure selon l'une des revendications précédentes, **caractérisé en ce que** le rapport de cycle opératoire entre les intervalles d'alimentation et les intervalles de réduction d'alimentation dépend de la fréquence du signal d'entrée.

4. Dispositif de mesure selon l'une des revendications précédentes, **caractérisé en ce que** le rapport de cycle opératoire entre les intervalles d'alimentation et les intervalles de réduction d'alimentation peut être modifié au moyen d'un registre de contrôle (400-402) accessible en écriture depuis l'extérieur du circuit électronique.

5. Dispositif de mesure selon l'une des revendications précédentes, **caractérisé en ce qu'**il comprend en outre un circuit (46) de détection de l'état de charge de la batterie (110) alimentant le circuit électronique, et **en ce que** le rapport de cycle opératoire entre les intervalles d'alimentation et les intervalles de réduction d'alimentation peut être réduit par ledit circuit de détection d'état de charge (46).

6. Dispositif de mesure selon l'une des revendications précédentes, **caractérisé en ce que** ladite pluralité de registres de contrôle (400-402) est accessibles en écriture depuis l'extérieur du circuit électronique et permet de définir le fonctionnement des circuits de mesure et/ou d'alimentation.

7. Dispositif de mesure selon l'une des revendications précédentes, **caractérisé en ce qu'**il comprend en outre des moyens (43, 44, 43', 44') d'ajustage d'offset pour ajuster l'offset de mesure.

8. Dispositif de mesure selon la revendication précédente, **caractérisé en ce que** lesdits moyens d'ajustage d'offset comprennent au moins un amplificateur à compensation d'offset (31, 31') pour chaque canal de mesure.

9. Dispositif de mesure selon la revendication précédente, **caractérisé en ce que** les moyens d'ajustage d'offset comprennent pour chaque canal de mesure un registre (44, 44') indiquant une valeur de compensation d'offset et un convertisseur numérique-analogique (43, 43') commandant ledit amplificateur à compensation d'offset, la tension de référence du convertisseur numérique-analogique étant proportionnelle à la tension d'alimentation ($U_p$) du réseau d'électrodes magnétorésistives (100).

10. Dispositif de mesure selon l'une des revendications 7 à 9, **caractérisé en ce que** lesdits moyens d'ajustage d'offset comprennent des moyens de détermination d'offset (36) à la sortie du circuit de mesure.

11. Dispositif de mesure selon la revendication précédente, **caractérisé en ce que** lesdits moyens de détermination d'offset comprennent un convertisseur analogique-numérique (36) et des moyens d'échantillonnage du signal en deux points symétriques (S1, S2; C1, C2) par rapport au prochain extrema du signal (s, c).

12. Dispositif de mesure selon l'une des revendications précédentes, **caractérisé en ce que** les entrées (c, c'; s, s') des canaux de mesure sont des entrées différentielles.

13. Dispositif de mesure selon l'une des revendications précédentes, **caractérisé en ce qu'**il comprend n canaux de mesure destinés à être reliés au réseau d'électrodes magnétorésistives (100) de manière à recevoir n signaux déphasés de 360°/2n, et **en ce que** la grandeur fournie par ledit circuit de mesure est déterminée à partir des n signaux reçus.

14. Dispositif de mesure selon l'une des revendications précédentes, **caractérisé en ce qu'**il comprend deux canaux de mesure destinés à être reliés au réseau d'électrodes magnétorésistives de manière à recevoir deux signaux déphasés de 90° et **en ce que** la grandeur fournie par ledit circuit de mesure est déterminée à partir du rapport entre les deux signaux reçus.

15. Dispositif de mesure selon la revendication précédente, **caractérisé par** :

un convertisseur analogique/numérique (36) dont l'entrée de signal (IN) est reliée à l'un desdits canaux de mesure et l'entrée de référence (REF) à l'autre canal de mesure, de manière à fournir un résultat numérique correspondant à la division d'un signal par l'autre,

une table de conversion (37) dont la sortie indique ledit paramètre correspondant à l'arctangente ou à l'arccotangente du dit résultat numérique.

**16.** Dispositif de mesure selon la revendication précédente, **caractérisé par** des moyens commandables d'inversion (33, 33') et d'interversion (34) des signaux fournis à l'entrée dudit convertisseur analogique-numérique (36).

**17.** Dispositif de mesure selon l'une des revendications précédentes, **caractérisé en ce qu'**il comporte un circuit de mesure grossière (30, 31, 3235, 38, 39), comportant un compteur bidirectionnel (38) comptant le nombre de périodes (λ) traversées par le capteur depuis le début de la mesure, et un circuit de mesure fine (36, 37) interpolant la position du capteur (5) à l'intérieur d'une période.

**18.** Dispositif de mesure selon la revendication précédente, **caractérisé en ce qu'**il comporte un circuit de mode de veille (47), **en ce que**, dans un des modes de veille au moins le circuit de mesure grossière (30, 31, 3235, 38, 39) est alimenté et le circuit de mesure fine déconnecté, et **en ce que** le circuit de mode de veille réveille le circuit de mesure fine dès qu'un déplacement est détecté.

**19.** Dispositif de mesure de dimension (1) comprenant :

une règle (21) munie d'une succession de régions magnétisées (23, 24),

un capteur (5) apte à être déplacé parallèlement face à la règle (21) et muni d'un réseau d'électrodes magnétorésistives (100) reliées de manière à constituer au moins un pont de mesure,

un circuit d'alimentation électrique (42) dudit au moins un pont de mesure,

un circuit de mesure (30-39) fournissant au moins une grandeur dépendant de la résistance d'au moins une des électrodes magnétorésistives (100) lorsque ledit au moins un pont de mesure est alimenté,

**caractérisé par** un circuit (47) de mode de veille permettant de réduire sans la supprimer la consommation électrique du dispositif de mesure en mode de veille, et de rétablir la consommation électrique en réponse à un déplacement dudit capteur.

**20.** Dispositif de mesure de dimension selon la revendication précédente, **caractérisé en ce qu'**il comporte en outre un clavier, et **en ce que** ledit circuit de mode de veille permet en outre de rétablir la consommation électrique en réponse à l'actionnement du clavier.

**21.** Dispositif de mesure de dimension selon la revendication précédente, **caractérisé en ce qu'**il comporte en outre une interface sérielle, et **en ce que** ledit circuit de mode de veille permet en outre de rétablir la consommation électrique en réponse à la réception d'un message sur ladite interface sérielle.

**22.** Dispositif de mesure selon l'une des revendications 19 à 21, **caractérisé en ce que** lesdites électrodes sont alimentées au moins de manière intermittente en mode de veille, de façon à permettre une détection du déplacement du capteur.

**23.** Dispositif de mesure selon l'une des revendications 19 à 22, **caractérisé en ce que** ledit circuit de mesure comporte un circuit de mesure grossière (30, 31, 3235, 38, 39) et un circuit de mesure fine (36, 37), **en ce que**, en mode de veille le circuit de mesure grossière (30, 31, 3235, 38, 39) est alimenté et le circuit de mesure fine déconnecté, et **en ce que** le circuit de mode de veille réveille le circuit de mesure fine dès qu'un déplacement est détecté.

**24.** Dispositif de mesure selon la revendication précédente, **caractérisé en ce que** la tension d'alimentation est fournie entre deux bornes externes (Up, Un) du circuit,
une borne (Up) étant alimentée avec un potentiel maximal ($Up_{max}$) et l'autre (Un) avec un potentiel proche de 0 Volts pendant les intervalles d'alimentation,
les deux bornes étant alimentées avec un potentiel proche de la moitié dudit potentiel maximal pendant les intervalles de réduction d'alimentation.

**Patentansprüche**

1. Dimensionsmessvorrichtung (1), bestehend aus:

   einem Massstab (21) bestückt mit einer Folge von magnetisierten Regionen (23,24),

   einem Sensor (5), der parallel und gegenüber zum Lineal (21) verschoben werden kann und mit einem Netzwerk von magnetoresistiven Elektroden (100) versehen ist, welche zusammen verbunden sind, um mindestens eine Messbrücke zu bilden,

   eine elektronische Speiseschaltung (42) von besagter mindestens einer Messbrücke,

   einem Messstromkreis (30-39), der mindestens eine Grösse liefert in Abhängigkeit vom Widerstand von mindestens einem der magnetoresistiven Elektroden (100), während besagte Messbrücke gespeist wird, wobei besagte Schaltung mit einer Vielzahl von Betriebskontrollregistern ausgestattet ist,

   **dadurch gekennzeichnet, dass** besagte mindestens eine Messbrücke nicht kontinuierlich von der elektronischen Speiseschaltung (42) gespeist wird, um die Dissipation der Energie in besagten magnetoresistiven Elektroden während mindestens einem begrenzten Zeitraum zu verringern.

2. Messvorrichtung gemäss dem vorhergehenden Anspruch, **dadurch gekennzeichnet, dass** die Speisespannung zwischen zwei Terminals (Up, Un) der Speiseschaltung geliefert wird,
   wobei ein Terminal mit einem Potentialmaximum (Upmax) und das andere (Un) mit einem Potential nahe 0 Volt während der Speisungsintervalle versorgt wird,
   wobei die beiden Terminals mit einem Potential nahe der Hälfte des besagten Potentialmaximums während den Intervallen der Speisungsreduzierung versorgt werden.

3. Messvorrichtung gemäss einem der vorhergehenden Ansprüche, **dadurch gekennzeichnet, dass** das Tastverhältnis zwischen den Speisungsintervallen und den Intervallen der Speisungsreduzierung von der Frequenz des Eingangssignals abhängt.

4. Messvorrichtung gemäss einem der vorhergehenden Ansprüche, **dadurch gekennzeichnet, dass** das Tastverhältnis zwischen den Speisungsintervallen und den Intervallen der Speisungsreduzierung mittels einem Kontrollregister (400-402) - auf welches von ausserhalb des elektronischen Schaltkreises schreibenderweise zugegriffen werden kann - verändert werden kann.

5. Messvorrichtung gemäss einem der vorhergehenden Ansprüche, **dadurch gekennzeichnet, dass** sie unter anderem einen Schaltkreis (46) zur Erkennung des Ladezustandes der Batterie (110) zur Speisung des elektronischen Schaltkreises enthält, und dass das Tastverhältnis zwischen den Speisungsintervallen und den Intervallen der Speisungsreduzierung mittels besagtem Schaltkreis (46) zur Erkennung des Ladezustandes reduziert werden kann.

6. Messvorrichtung gemäss einem der vorhergehenden Ansprüche, **dadurch gekennzeichnet, dass** auf besagte Vielzahl von Kontrollregistern (400-402) schreibenderweise von ausserhalb des elektronischen Schaltkreises zugegriffen werden kann, und dass diese es erlauben, das Funktionieren des Messstromkreises und/oder der Speiseschaltung zu definieren.

7. Messvorrichtung gemäss einem der vorhergehenden Ansprüche,**dadurch gekennzeichnet, dass** sie Offset-Justierungsmittel (43, 44,43',44') für das Justieren der Offsetmessung enthält.

8. Messvorrichtung gemäss dem vorhergehenden Anspruch, **dadurch gekennzeichnet, dass** besagte Offset-Justierungsmittel wenigstens einen Verstärker zur Offsetkompensation (31,31') für jeden Messkanal enthalten.

9. Messvorrichtung gemäss dem vorhergehenden Anspruch, **dadurch gekennzeichnet, dass** die Offset-Justierungsmittel für jeden Messkanal ein Register (44,44') enthalten, das einen Offset-Kompensationswert angibt, und einen digital-analog Wandler (43,43'), der besagten Verstärker zur Offsetkompensation kontrolliert, wobei die Referenzspannung des digital-analog Wandlers sich proportional zur Speisespannung (Up) des Netzwerkes von magnetoresistive Elektroden (100) verhält.

**10.** Messvorrichtung gemäss einem der Ansprüche 7 bis 9, **dadurch gekennzeichnet, dass** besagte Offset-Justierungsmittel am Ende des Messstromkreises Offset-Bestimmungsmittel (36) enthalten.

**11.** Messvorrichtung gemäss dem vorhergehenden Anspruch, **dadurch gekennzeichnet, dass** besagte Offset-Bestimmungsmittel einen digital-analog Wandler (36) und Mittel zum Samplen des Signals an zwei symmetrischen Punkten (S1,S2; C1,C2) in Bezug auf die nächsten Extrema des Signals (s, c) enthalten.

**12.** Messvorrichtung gemäss einem der vorhergehenden Ansprüche, **dadurch gekennzeichnet, dass** die Eingänge (c,c';s,s') der Messkanäle Differentialeingänge sind.

**13.** Messvorrichtung gemäss einem der vorhergehenden Ansprüche, **dadurch gekennzeichnet, dass** sie n Messkanäle enthält, die dazu bestimmt sind, mit dem Netzwerk der magnetoresistiven Elektroden (100) verbunden zu werden, um n um 360°/2n phasenverschobene Signale zu empfangen, wobei die durch besagten Messstromkreis gelieferte Grösse aufgrund der empfangenen n Signale bestimmt wird.

**14.** Messvorrichtung gemäss einem der vorhergehenden Ansprüche, **dadurch gekennzeichnet, dass** sie zwei Messkanäle enthält, die dazu bestimmt sind, mit dem Netzwerk der magnetoresistiven Elektroden verbunden zu werden, um zwei um 90° phasenverschobene Signale zu empfangen, wobei die durch besagten Messstromkreis gelieferte Grösse aufgrund des Verhältnisses zwischen den empfangenen zwei Signalen bestimmt wird.

**15.** Messvorrichtung gemäss dem vorhergehenden Anspruch, **gekennzeichnet durch**:

einen digital-analog Wandler (36), dessen Signaleingang (IN) mit einem der besagten Messkanäle und der Referenzeingang (REF) mit dem anderen Messkanal verbunden ist, um ein digitales Resultat, das der Division von einem **durch** das andere Signal entspricht, zu liefern

eine Umrechnungstabelle (37), deren Ausgang besagten Parameter angibt, welcher der umgekehrten Bogen-Tangente oder der umgekehrten Bogen-Co-Tangente von besagtem digitalen Resultat entspricht.

**16.** Messvorrichtung gemäss dem vorhergehenden Anspruch, durch kontrollierbare Mittel zur Umwandlung (33,33') und Umkehrung (34) der an den Eingang von besagtem digital-analog Konverter (36) gelieferten Signale gekennzeichnet.

**17.** Messvorrichtung gemäss einem der vorhergehenden Ansprüche, **dadurch gekennzeichnet, dass** sie einen groben Messstromkreis (30,31,3235,38,39) enthält, der einen bidirektionalen Zähler (38) zur Zählung der vom Sensor zurückgelegten Perioden (λ) seit Beginn der Messung enthält, und einen feinen Messstromkreis (36, 37), der die Position des besagten Sensors (5) innerhalb einer Periode interpoliert.

**18.** Messvorrichtung gemäss dem vorhergehenden Anspruch, **dadurch gekennzeichnet, dass** sie einen Standby Modus Schaltkreis (47) enthält, dass in einem der Modi mindestens der grobe Messstromkreis (30,31,3235,38,39) versorgt und der feine Messstromkreis (36, 37) unterbrochen wird, und dass der Standby Modus den feinen Messstromkreis reaktiviert, sobald eine Bewegung festgestellt wird.

**19.** Dimensionsmessvorrichtung (1), bestehend aus:

einem Massstab (21) bestückt mit einer Folge von magnetisierten Regionen (23,24),

einem Sensor (5), der parallel und gegenüber zum Lineal (21) verschoben werden kann und mit einem Netzwerk von magnetoresistiven Elektroden (100) versehen ist, welche zusammen verbunden sind, um mindestens eine Messbrücke zu bilden,

eine elektronische Speiseschaltung (42) von besagter mindestens einer Messbrücke,

einem Messstromkreis (30-39), der mindestens eine Grösse liefert in Abhängigkeit vom Widerstand von mindestens einem der magnetoresistiven Elektroden (100), während besagte Messbrücke gespeist wird,

durch einem Standby Modus Schaltkreis (47) gekennzeichnet, welcher den Energiegebrauch der Messvorrichtung im Standby Modus verringert, ohne sie aufzuheben, und den Energiegebrauch wieder herstellt, wenn eine Bewegung besagtes Sensors wahrgenommen wird.

**20.** Messvorrichtung gemäss dem vorhergehenden Anspruch, **dadurch gekennzeichnet, dass** sie ferner eine Tastatur enthält, und dass besagter Standby Modus Schaltkreis ferner den Energiegebrauch wieder herstellen kann, wenn die Tastatur betätigt wird.

**21.** Messvorrichtung gemäss dem vorhergehenden Anspruch, **dadurch gekennzeichnet, dass** sie ferner eine serielle Schnittstelle enthält, und dass besagter Standby Modus Schaltkreis ferner den Energiegebrauch wieder herstellen kann, wenn eine Mitteilung auf besagter seriellen Schnittstelle empfangen wird.

**22.** Messvorrichtung gemäss einem der Ansprüche 19 bis 21, **dadurch gekennzeichnet, dass** besagte Elektroden in Standby Modus mindestens zeitweilig versorgt werden, um zu erlauben, dass eine Bewegung des Sensors wahrgenommen werden kann.

**23.** Messvorrichtung gemäss einem der Ansprüche 19 bis 22, **dadurch gekennzeichnet, dass** besagte Messstromkreis einen groben Messstromkreis (30,31,3235,38,39) und einen feinen Messstromkreis (36, 37) enthält, dass in Standby Modus der grobe Messstromkreis (30,31,3235,38,39) gespeist und der fine Messstromkreis unterbrochen wird, und dass der Standby Modus Schaltkreis den feinen Messstromkreis wieder aktiviert, sobald eine Bewegung wahrgenommen wird.

**24.** Messvorrichtung gemäss dem vorhergehenden Anspruch, **dadurch gekennzeichnet, dass** die Speisespannung zwischen zwei Terminals (Up, Un) der Schaltung geliefert wird,
wobei ein Terminal mit einem Potentialmaximum (Upmax) und das andere (Un) mit einem Potential nahe 0 Volt während den Speisungsintervallen versorgt wird,
wobei die beiden Terminals mit einem Potential nahe der Hälfte des besagten Potentialmaximums während den Intervallen der Speisungsreduzierung versorgt werden.

## Claims

**1.** Dimension-measuring device (1) comprising:

a scale (21) provided with a series of magnetized zones (23, 24),

a sensor (5) capable of moving parallel to and opposite the scale (21) and provided with a network of magnetoresistive electrodes (100) connected so as to constitute at least one measuring bridge,

an electric circuit (42) for feeding said at least one measuring bridge,

a measuring circuit (30-39) supplying at least one value dependent upon the resistance of at least one of the magnetoresistive electrodes (100) when said at least one measuring bridge is powered, said circuit comprising a plurality of operating control registers,

**characterised in that** said at least one measuring bridge is not continuously fed by said feed circuit (42), so as to lessen during at least one interval of limited duration the dissipation of energy in said magnetoresistive electrodes.

**2.** Measuring device according to the preceding claim, **characterised in that** the feed voltage is supplied between two external terminals (Up, Un) of the feeding circuit,
one terminal (Up) being powered with a maximum potential (Up$_{max}$) and the other (Un) by a potential close to 0 volts during feeding intervals,
both terminals being powered by a potential close to half of said maximum potential during feed-reduction intervals.

**3.** Measuring device according to one of the preceding claims, **characterised in that** the duty cycle ratio between feeding intervals and feed-reduction intervals depends on the frequency of the input signal.

**4.** Measuring device according to one of the preceding claims, **characterised in that** the duty cycle ratio between feeding intervals and feed-reduction intervals can be modified by means of a control register (400-402) writable from outside the electronic circuit.

5. Measuring device according to one of the preceding claims, **characterised in that** it further comprises a circuit (46) for detecting the charge level of the battery (110) feeding the electronic circuit, and **in that** the duty cycle ratio between the feeding intervals and the feed-reduction intervals can be reduced by said charge-level detection circuit (46).

6. Measuring device according to one of the preceding claims, **characterised in that** said plurality of control registers (400-402) are writable from outside the electronic circuit and enable the functions of the measuring- and/or feed circuit to be defined.

7. Measuring device according to one of the preceding claims, **characterised in that** it further comprises offset-adjusting means (43, 44, 43', 44') for adjusting the measuring offset.

8. Measuring device according to the preceding claim, **characterised in that** said offset-adjusting means include at least one offset compensation amplifier (31, 31') for each measuring channel.

9. Measuring device according to the preceding claim, **characterised in that** the offset-adjusting means include for each measuring channel a register (44, 44') indicating an offset compensation value and a digital-to-analog converter (43, 43') controlling said offset compensation amplifier, the reference voltage of said digital-to-analog converter being proportional to said feed voltage ($U_p$) of the network of magnetoresistive electrodes (100).

10. Measuring device according to one of the claims 7 to 9, **characterised in that** said offset-adjusting means include offset determining means (36) at the output of said measuring circuit.

11. Measuring device according to the preceding claim, **characterised in that** said offset determining means include an analog-to-digital converter (36) and means for sampling the signal at two symmetrical points (S1, S2; C1, C2) in relation to the next extremes of the signal (s, c).

12. Measuring device according to one of the preceding claims, **characterised in that** the inputs (c, c'; s, s') of the measuring channels are differential inputs.

13. Measuring device according to one of the preceding claims, **characterised in that** it comprises n measuring channels designed to be connected to the network of magnetoresistive electrodes (100) so as to receive n signals dephased by 360°/2n, and **in that** the value supplied by said measuring circuit is determined on the basis of the n signals received.

14. Measuring device according to one of the preceding claims, **characterised in that** it comprises two measuring channels designed to be connected to the network of magnetoresistive electrodes so as to receive two signals dephased by 90° and **in that** the value supplied by said measuring circuit is determined on the basis of the ratio between the two signals received.

15. Measuring device according to the preceding claim, **characterised by**:

    an analog-to-digital converter (36) having a signal input (IN) connected to one of said measuring channels and a reference input (REF) to the other measuring channel so as to supply a digital result corresponding to the division of one signal by the other,

    a conversion table (37) having an output indicating a parameter corresponding to the inverse tangent or the inverse cotangent of said digital result.

16. Measuring device according to the preceding claim, **characterised by** controllable means for inversion (33, 33') and transposition (34) of the signals supplied at the input of said analog-to-digital converter (36).

17. Measuring device according to one of the preceding claims, **characterised in that** it comprises a rough measuring circuit (30, 31, 3235, 38, 39) having a bi-directional counter (38) counting the number of periods (λ) traversed by the sensor from the beginning of the measurement and a fine measuring circuit (36, 37) interpolating the position of the sensor (5) within a period.

**18.** Measuring device according to the previous claim, **characterised in that** it comprises a standby-mode circuit (47), **in that** at least said rough measuring circuit (30, 31, 3235, 38, 39) is powered and said fine measuring circuit is disconnected, and **in that** the standby mode reactivates said fine measuring circuit as soon as a movement is detected.

**19.** Dimension-measuring device (1) comprising:

a scale (21) provided with a series of magnetized zones (23, 24),

a sensor (5) capable of moving parallel to and opposite the scale (21) and provided with a network of magnetoresistive electrodes (100) connected so as to constitute at least one measuring bridge,

an electric circuit (42) for feeding said at least one measuring bridge,

a measuring circuit (30-39) supplying at least one value dependent upon the resistance of at least one of the magnetoresistive electrodes (100) when said at least one measuring bridge is powered,

**characterised by** a standby-mode circuit (47) allowing the electric consumption of the measuring device to be reduced without being suppressed in standby mode and to be re-established in response to a movement of said sensor.

**20.** Dimension-measuring device according to the preceding claim, **characterized in that** it further comprises a keyboard and **in that** said standby-mode circuit further enables the electric consumption to be re-established in response to the keyboard being operated.

**21.** Dimension-measuring device according to the preceding claim, **characterized in that** it further comprises a serial interface and **in that** said standby-mode circuit further enables the electric consumption to be re-established in response to a message being received on said serial interface.

**22.** Measuring device according to one of the claims 19 to 21, **characterized in that** said electrodes are fed at least intermittently in standby mode, so as to enable a movement of the sensor to be detected.

**23.** Measuring device according to one of the claims 19 to 22, **characterised in that** said measuring circuit comprises a rough measuring circuit (30, 31, 3235, 38, 39) and a fine measuring circuit (36, 37), **in that**, in standby mode the rough measuring circuit (30, 31, 3235, 38, 39) is powered and the fine measuring circuit is disconnected, and **in that** the standby-mode circuit reactivates the fine measuring circuit as soon as a movement is detected.

**24.** Measuring device according to the preceding claim, **characterised in that** the feed voltage is supplied between two external terminals ($U_p$, $U_n$) of the circuit,
one terminal (Up) being powered with a maximum potential (Up max) and the other (Un) by a potential close to 0 volts during feeding intervals,
both terminals being powered by a potential close to half of said maximum potential during feed-reduction intervals.

FIG. 1

**FIG. 2**

EP 1 052 473 B1

**FIG. 3**

EP 1 052 473 B1

FIG. 4

FIG. 6

18

FIG. 5

**FIG. 7**

**FIG. 8**